# EUROPEAN PATENT SPECIFICATION

(11) **EP 1 078 657 B1**
(45) Date of publication and mention of the grant of the patent: **24.11.2004**
(21) Application number: 99202481.0
(22) Date of filing: 28.07.1999
(51) Int. Cl.: A63B 55/08, A63B 55/00, B62B 1/04

(54) **Golf bag**
Golftasche
Sac de golf

(43) Date of publication of application: 28.02.2001
(73) Proprietor: Moex Trade GmbH, 6343 Rotkreuz (CH)
(72) Inventor: Kaufmann, Fredi, 6331 Hünenberg (CH)
(74) Representative: 't Jong, Bastiaan Jacobus

(56) References cited:
- DE-U- 9 415 259
- GB-A- 941 603
- US-A- 4 822 071
- US-A- 5 579 968

## Description

The present invention relates to a golf bag, particularly a golf bag for storage and transport of golf clubs having extendable wheels, over which, when extended, the golf bag can be dragged along, in accordance with the preamble of claim 1, which reflects the prior art as disclosed in DE 94 15 259 U and/or in US 5 579 968.

Such a wheel or wheels are arranged on the free end of a leg, which is pivotably connected to the golf bag, such that the legs can be extended by hand when pulling the pull rod in order to render the golf bag transportable, i.e. for rolling over the wheel or wheels.

The known golf bag has for a disadvantage, that extension of the wheel or wheels and in particular the pull rod requires a considerable manual force from a golf player, which is cumbersome.

The present invention has for an objective to provide a golf bag with a very simple configuration comprising few separate parts and optimum user comfort and ease of operation. According to the present invention a golf bag is provided with the additional features of the characterizing portion of claim 1.

By applying in a golf bag according to the present invention a back bone in stead of a centrally oriented element, space available in the holder is optimally used. By applying the pull rod as a control over the resilient biasing means for extension or retraction of the wheel, the pull rod is given a double function, thereby minimizing complexity and a number of parts required in the golf bag. Use of the pull rod as an extendable element of the back bone assembly for control over the biasing means for extension and retraction of the wheel further has the advantage, that a handle at the free end of the pull rod, which is usually large in relation to the dimensions of the pull rod itself, can be moved out of the way of openings for insertion of golf clubs into the holder. Thereby access to the golf clubs in the holder is facilitated.

According to the invention the folding mechanism comprises biasing means forcing the wheel to extend. As the pull rod is extendable in the longitudinal direction of the back bone assembly, operation of the pull rod is highly advantageous, especially in retracting the wheel against the force exerted by the biasing means, as no other parts of the golf bag than the pull rod and the corresponding back bone assembly are subjected to any kind of force in order to achieve retraction of the wheel. Thereby also use of the backbone configuration to provide more room inside the holder is facilitated, because no exerted force needs to be evenly distributed over other components of the golf bag, as would be the case with a centrally oriented element. Preferably the biasing means could be formed by a gas spring.

When biassing means are provided preferably the golf bag is provided with latch means to prevent extension of the wheel, for instance when storing the golf bag to minimize the space required, or on the golf course, when the golf bag is placed on its bottom side.

In yet another preferred embodiment the leg comprises two or more than two bars, each pivotably extending from the backbone assembly to a wheel carrier of the wheel, to which said bars are also pivotably connected, where the bars are connected at a distance from one another to both the backbone assembly and the wheel carrier to position the wheel both in an extended state and in a retracted state. This is especially advantageous in the case of two wheels, where the wheels can be retracted in a close relationship against the holder, while they are positioned in a parallel orientation, when extended. Thus the orientation of the wheels can thereby advantageously be controlled and predetermined. In such an embodiment preferably the bars are connected to the backbone assembly at a distance in the direction of extension of the wheel, to achieve the desired parallel orientation.

These and other features and advantages of the present invention will be further elucidated in the description below, in which reference is made to the accompanying drawings, in which:
fig. 1 is a perspective view of a golf bag according to the present invention with the wheels thereof retracted;
fig. 2 is a view corresponding to fig. 1, with the wheels extended;
fig. 3 is a partially broken away perspective view corresponding to fig. 1, but without the holder;
fig. 4 is a partially broken away perspective view, corresponding to fig. 2, but without the holder; and
fig. 5A and fig. 5B are schematic side views corresponding to figs. 3 and 4.

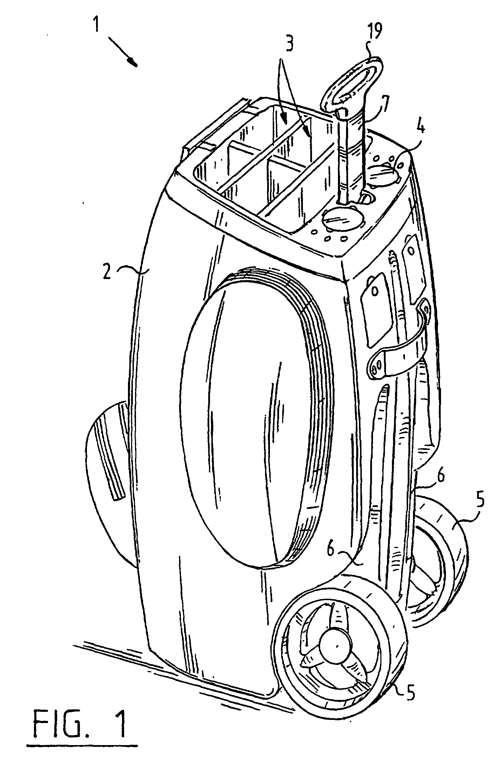

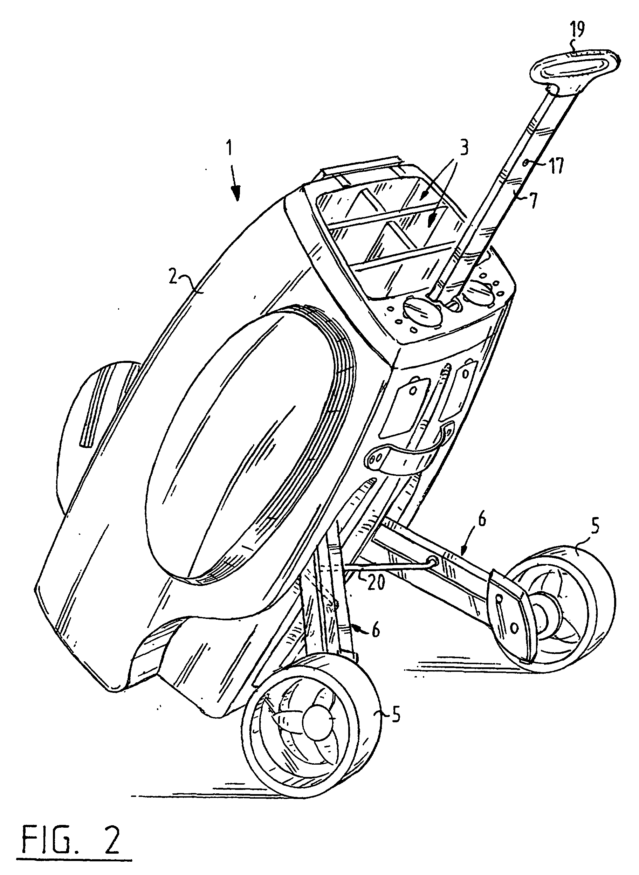

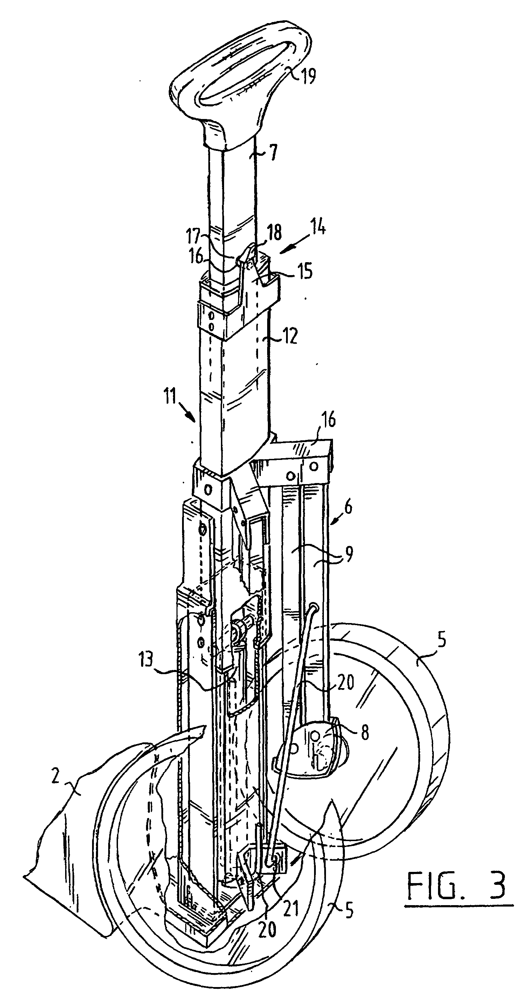

In fig. 1 a golf bag 1 according to the present invention is shown. The golf bag 1 comprises a holder 2 with a number of openings 3 in the top side thereof for insertion of golf clubs to be stored and transported in the golf bag 1. The holder 2 further comprises several other features, such as a storage facility 4 for golf balls, etc.

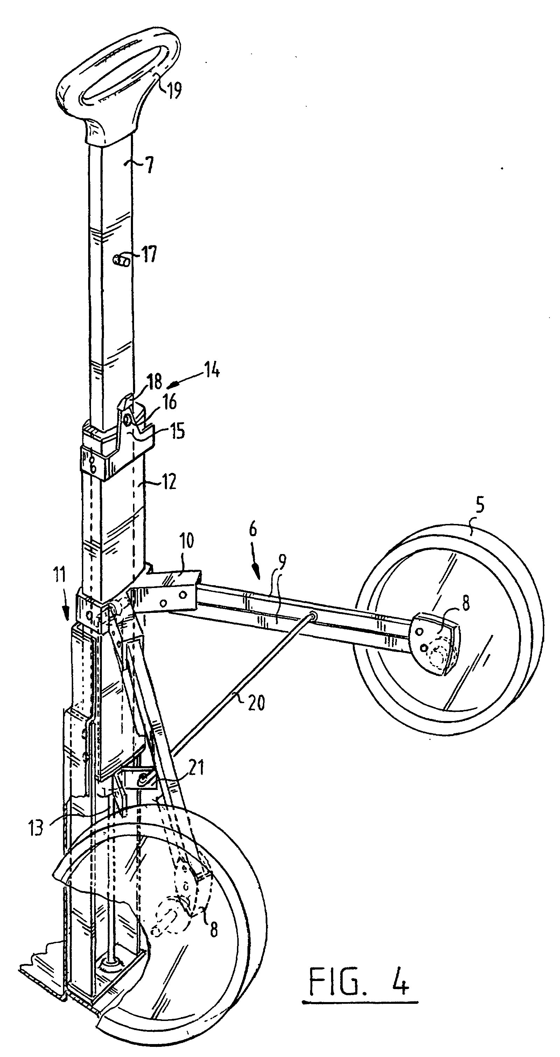

The golf bag 1 in fig. 1 is shown with a set of wheels 5 in a retracted position thereof. The wheels 5 are, as will be described in more detail below, connected to legs 6, which can be swung to the position shown in fig. 2, i.e. the extended position of the wheels 5. It is emphasized here that the golf bag can be dragged along by a user with the legs 6 in the retracted position thereof, while the golf bag 1 then still rolls over wheels 5, just as with extended legs.

Extending the wheels 5 at the free ends of the legs 6 into the extended position shown in fig. 2 is achieved by extension of the pull rod 7, as will be described in more detail below.

In fig. 3 a perspective view corresponding to fig. 1 is shown, where the holder 2 of the golf bag has been partially broken away. In fig. 3 the backbone assembly 11 is made visible, which in figs. 1 and 2 is hidden by the holder 2.

The backbone assembly 11 consists of a sleeve 12, extending from the top of the holder 2 down to the bottom of the golf bag 1. In the sleeve 12 the pull rod 7 is slidably arranged. Underneath the pull rod 7 and inside the sleeve 12 a gas spring 13 forming biassing means is arranged, where the gas spring 13 exerts a biassing force on the pull rod 7, forcing the pull rod 7 to extend out of the sleeve 12. In the state shown in fig. 3 such extension of the pull rod 7 out of the sleeve 12 is effectively prevented by the latch means 14, consisting of a resilient plate 15 attached to the sleeve 12 with a pin 17 attached to pull rod 7, which extends into a hole 16 arranged in the side of the resilient plate 15. When the pin 17 is retracted out of the hole 16 by operation of handle 18, the pull rod 7 is free to extend out of the sleeve 12 under influence of the gas spring 13.

When the pull rod 7 is shifted out of the sleeve 12 under influence of the gas spring 13, the legs 6 are pivoted outward relative to the sleeve 12, whereby the wheels 5 are extended, as a result of the folding mechanism formed by bars 20. The bars 20 are pivotably connected to the pull rod 7 and to one of the bars 9, together forming one of the legs 6. When the pull rod 7 is moved upward, the lower end of the bars 20 is moved upward therewith, whereby the legs 6 are pivoted outward as a result of the connection between the pull rod 7 and the legs 6 formed by the bars 20.

The legs 6 each consist of two bars 9 extending between a shoulder 10 connected to the sleeve 12 and a wheel carrier 8, to which the wheels 5 are rotatably attached. The bars 9 are at different distances in fig. 3 from the sleeve 12 at the shoulder 10. Thereby a predetermined direction of outward pivoting movement of the legs 6 to extend the wheels 5 is ensured. A similar configuration is used at the wheel carriers 8, whereby the wheels 5 are oriented in a parallel direction with the legs 6 extended, as shown in fig. 4.

The sleeve 12 is open on one side to enable upward and downward movement of a connection plate 21, to which the bars 20 are pivotably connected. Thus, the end of the bars 20 connected to the connection plate 21 are free to follow upward and downward movement of the pull rod 7 to extend and retract the wheels 5.

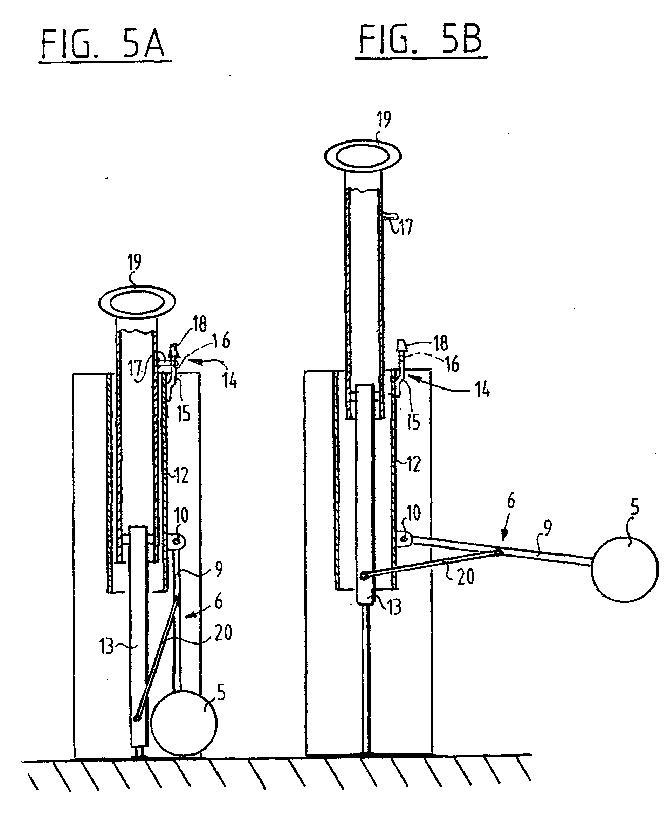

Figs. 5A and 5B are schematic side views, corresponding to figs. 3 and 4 respectively. Here the function of the folding mechanism formed by the bars 20 is more clearly shown, as well as that of the latch means 14. Further it is clear from figs. 5A and 5B, that a very simple configuration is possible with the present invention.

In use the golf bag according to the present invention is operated as follows. From the state shown in figs. 1, 3 and 5A, the golf bag is transformed into the state shown in figs. 2, 4 and 5B, wherein the wheels 5 thereof are extended, by disengaging the latch means 14. The pull rod 7 is free for movement in a longitudinal direction relative to the sleeve 12, and is forced upward under influence of the gas spring 13. No participation of the golfer or user of the golf bag is required. As the pull rod 7 moves upward through the sleeve 12, the lower ends of the bars 20, connected to the pull rod 7 through the connection plate 21, are also forced upward, whereby the legs 6 are forced outward to achieve the extended state of the wheels 5.

In this state, particularly the one shown in fig. 2, a grip 19 can be engaged by the golfer or user of the golf bag to drag the golf bag 1 along, which then rolls over the wheels 5 thereof. The grip 19 extends high above the openings 3 in the holder of the golf bag, whereby access to these openings 3 is facilitated. Further the grip 19 is at a distance from the openings 3, such that the heads of the golf clubs extending out of the openings 3 do not rattle against the hand of the golfer or user of the golf bag, which is in engagement with the grip 19.

When storing the golf bag it is desirable to save space. Also when arriving at a point of destination along the fairway or on the putting green, it may be desirable to bring the golf bag 1 back into the state shown in figs. 1, 3 and 5A to be able to position the golf bag on its bottom side in a stable manner. In these and other cases, the grip 19 can be engaged by the user or golfer to force the pull rod back down into the sleeve 12. With this retraction of the wheels 5 against the golf bag 1 is achieved in a reverse motion relative to the one described above in reference to extension of the wheels 5. The pull rod 7 is brought back down into the sleeve 12 up to the point, where the pin 17 again engages the hole 16 to activate the latch means 14. After this, the grip 19 can be released, whereafter the golf bag 1 will remain in the state shown in figs. 1, 3 and 5A.

To force the pull rod 7 back down into the sleeve 12 the biassing force of the gas spring 13 has to be overcome. The gas spring 13 is therefore dimensioned and pressurized, for example at 70 N, to achieve easy extension of the wheels 5 as well as low force insertion of the pull rod 7 back into the sleeve 12.

The pull rod 7 is preferably forced down into the sleeve 12 with the golf bag 1 in the upright position as shown in fig. 1, but with the wheels 5 still extended. Forcing the pull rod 7 down into the sleeve 12 retracts the wheels 5 to achieve the state actually shown in fig. 1. For this no force needs to be exerted on any other part of the golf bag 1 than the pull rod 7. Thereby no forces on such other parts of the golf bag 1 need to be distributed, and the sleeve 12 and the pull rod 7 can be configured as part of a backbone assembly 11 to the side of the openings 3. Thus the amount of space effectively available in the holder 2 is maximized. With the positioning of the backbone assembly 11 to the side of the openings 3 access to these openings 3 to insert or retrieve a golf club to be placed in the holder 2 is again optimized.

In the light of the disclosure above a person skilled in the art will be confronted with many changes and adaptations of a golf bag according to the present invention, which are all considered to be within the scope of the present invention as defined in the appended claims. For instance a different configuration of the pull rod and the sleeve can be applied, for instance by using tubes of different diameter, which are coaxially movable relative to one another. Also the holder 2 can have a variety of different shapes other than the one shown in figs. 1 and 2. In the preceding description, the latch means engage the pull rod from the sleeve, but alternatively similar latch means can act on the legs from the sleeve or from the holder itself, or any other kind of latch means can be provided. Further, the gas spring can be replaced by any kind of alternative element, such as an elastic band attached to the inside of the sleeve and engaging the bottom side of the pull rod 7. Also embodiments of the present invention with a single bar to form a leg connecting the wheel to the backbone assembly can be realized. Guidance of the legs to achieve a desired relative positioning of both wheels can be achieved for instance by appropriately arranged slits, where the legs are to protrude out of the golf bag in an extended state of the wheels thereof, etc.

## Claims

1. Golf bag (1), comprising
- an elongate and extendable backbone assembly (11);
- at least one leg (6) pivotably connected to the backbone assembly and at the free end thereof provided with a wheel (5);
- a folding mechanism (20) arranged between the backbone assembly and the leg to extend and retract the wheel when the backbone assembly is extended and compressed, respectively;
- a holder (2) connected to the backbone assembly for storage therein of golf clubs,
where the backbone assembly comprises a pull rod (7) for transport of the golf bag, which pull rod is extendable relative to the backbone assembly, and where the folding mechanism is connected to the pull rod,
**characterized in that**
the folding mechanism comprises biasing means (13) forcing the wheel (5) to extend whereby the pull rod is arranged to control the biasing means for selective extension or retraction of the wheel.

2. Golf bag according to claim 1, where the pull rod is movably arranged in a sleeve (12), which supports the holder (2) for golf clubs.

3. Golf bag according to claim 1 or 2, where the biasing means comprise a gas spring (13).

4. Golf bag according to claim 1, 2 or 3, where latch means (14) are provided to prevent extension of the wheel.

5. Golf bag according to claim 4, where the latch means (14) comprise a hole (16) and pin (17) configuration arranged between said sleeve (12) and said pull rod (7).

6. Golf bag according to claim 5, where the pin (17) is mounted on said pull rod to engage releasably the hole (16) in a resilient plate (15) attached to said sleeve (12) in a predetermined relative positioning of the sleeve and the pull rod.

7. Golf bag according to claim 6, where the resilient plate (15) is at least partially manufactured from POM, for example polyacetal.

8. Golf bag according to any one of the preceding claims, where the leg (6) comprises two or more than two bars (9) each pivotably extending from the backbone assembly (11) to a wheel carrier of the wheel (5), to which said bars are also each pivotably connected, where the bars are connected at a distance from one another to both the backbone assembly and the wheel carrier to position the wheel (5) both in an extended state and in a retracted state.

9. Golf bag according to claim 8, where the bars (9) are connected to the backbone assembly (11) at a distance in the direction of extension of the wheel.

## Patentansprüche

1. Golftasche (1), welche aufweist:
eine langgestreckte und ausziehbare Rückgratbaugruppe (11),
zumindest einen Fuß (6), der mit der Rückgratbaugruppe verschwenkbar verbunden ist und an seinem freien Ende mit einem Rad (5) versehen ist;
einen Faltmechanismus (20), der zwischen der Rückgratbaugruppe und dem Fuß angeordnet ist, um das Rad auszuziehen und zurückzuziehen, wenn die Rückgratbaugruppe erweitert bzw. zusammengedrückt wird;
einen Halter (20), der mit der Rückgratbaugruppe verbunden ist, um darin Golfschläger aufzubewahren,
wobei die Rückgratbaugruppe einen Ziehstab (7) aufweist, um die Golftasche zu transportieren, wobei der Ziehstab in bezug auf die Rückgratbaugruppe ausziehbar ist und wobei der Faltmechanismus mit dem Ziehstab verbunden ist,
**dadurch gekennzeichnet, dass**
der Faltmechanismus eine Vorspannungseinrichtung (13) aufweist, welche das Rad (5) dazu zwingt, sich zu erstrecken, wodurch der Ziehstab eingerichtet ist, um die Vorspannungseinrichtung zur wahlweisen Erweiterung oder Zurückziehung des Rads zu steuern.

2. Golftasche nach Anspruch 1, wobei der Ziehstab in einer Muffe (12) bewegbar angeordnet ist, die den Halter (2) für Golfschläger lagert.

3. Golftasche nach Anspruch 1 oder 2, wobei die Vorspannungseinrichtung eine Gasfeder (13) aufweist.

4. Golftasche nach Anspruch 1, 2 oder 3, wobei die Verriegelungseinrichtung (14) vorgesehen ist, um ein Ausziehen des Rads zu verhindern.

5. Golftasche nach Anspruch 4, wobei die Verriegelungseinrichtung (14) den Aufbau eines Lochs (16) und eines Stifts (17) aufweist, die zwischen der Muffe (12) und dem Ziehstab (7) angeordnet sind.

6. Golftasche nach Anspruch 5, wobei der Stift (17) auf dem Ziehstab befestigt ist, um das Loch (16) in einer Federplatte (15), welche an der Muffe (12) befestigt ist, in einer vorher festgelegten Relativposition der Muffe und des Ziehstabs lösbar zu erfassen.

7. Golftasche nach Anspruch 6, wobei die Federplatte (15) zumindest teilweise aus POM, beispielsweise Polyazetal hergestellt ist.

8. Golftasche nach einem der vorhergehenden Ansprüche, wobei der Fuß (6) zwei oder mehrere als zwei Stangen (9) aufweist, die sich jeweils von der Rückgratbaugruppe (7) zu einem Radträger des Rads (5) verschwenkbar erstrecken, mit denen die Stangen ebenfalls verschwenkbar verbunden sind, wobei die Stangen in einem Abstand voneinander sowohl mit der Rückgratbaugruppe als auch dem Radträger verbunden sind, um das Rad (5) in einem ausgezogenen Zustand und in einem zurückgezogenen Zustand zu positionieren.

9. Golftasche nach Anspruch 8, wobei die Stangen (9) mit der Rückgratbaugruppe (11) in einem Abstand in der Ausziehrichtung des Rads verbunden sind.

## Revendications

1. Sac de golf (1 ), comprenant ;
- un ensemble d'ossature allongé et extensible (11) ;
- au moins une jambe (6) connectée, de façon pivotante, à l'ensemble d'ossature et munie à son extrémité libre d'une roue (5) ;
- un mécanisme de pliage (20) prévu entre l'ensemble d'ossature et la jambe pour étendre et rétracter la roue lorsque l'ensemble d'ossature est respectivement étendu et comprimé ;
- un support (2) connecté à l'ensemble d'ossature pour le stockage de clubs de golf ;
dans lequel l'ensemble d'ossature comprend une tige de traction (7) pour le transport du sac de golf, tige de traction pouvant être étendue par rapport à l'ensemble d'ossature, et le mécanisme de pliage est connecté à la tige de traction ;
**caractérisé en ce que** le mécanisme de pliage comprend un moyen de poussée (13) forçant en extension la roue (5), la tige de traction étant ainsi prévue pour commander le moyen de poussée pour une extension ou une rétraction sélective de le roue.

2. Sac de golf selon la revendication 1, dans lequel la tige de traction est prévue mobile dans un manchon (12) supportant le support (2) de clubs de golf.

3. Sac de golf selon la revendication 1 ou 2, dans lequel le moyen de poussée comprend un ressort à gaz (13).

4. Sac de golf selon la revendication 1, 2 ou 3, dans lequel des moyens de verrouillage (14) sont prévus pour empêcher une extension de la roue.

5. Sac de golf selon la revendication 4, dans lequel les moyens de verrouillage (14) comprennent un trou (16) et une broche (17) disposés entre ledit manchon (12) et ladite tige de traction (7).

6. Sac de golf selon la revendication 5, dans lequel la broche (17) est montée sur ladite tige de traction pour engager, de façon amovible, le trou (16) dans une plaque élastique (15) fixée audit manchon (12) dans une position relative prédéterminée du manchon et de la tige de traction.

7. Sac de golf selon la revendication 6, dans lequel la plaque élastique (15) est au moins partiellement fabriquée à partir de POM, par exemple du polyacétale.

8. Sac de golf selon l'une quelconque des revendications précédentes, dans leciuel la jambe (6) comprend deux ou plus de deux barres (9) s'étendant chacune, de façon pivotante, à partir de l'ensemble d'ossature (11) vers un support de la roue (5) sur lequel lesdites barres sont connectées, de même, chacune de façon pivotante, les barres étant connectées à une certaine distance l'une de l'autre, à la fois, à l'ensemble d'ossature et au support de roue pour positionner la roue (5), à la fois, dans un état étendu et dans un état rétracté.

9. Sac de golf selon la revendication 8, dans lequel les barres (9) sont connectées à l'ensemble d'ossature (11) à une certaine distance en direction de l'extension de la roue.
